# EUROPÄISCHE PATENTSCHRIFT

(11) **EP 2 806 260 B1**
(45) Veröffentlichungstag und Bekanntmachung des Hinweises auf die Patenterteilung: **10.08.2016**
(21) Anmeldenummer: 13405063.2
(22) Anmeldetag: 22.05.2013
(51) Int. Cl.: G01N 1/06, G01N 1/28, G02B 21/32, G02B 21/34, G01N 1/42

(54) **Vorrichtung zur Übertragung von Schnittbändern auf Probenhalter für die Transmissions-Elektronenmikroskopie sowie Verfahren zu deren Verwendung**
Device for the transmission of cut strips to sample holders for transmission electron microscopy and method for their use
Dispositif de transmission de bandes de coupe sur des porte-échantillons pour la microscopie électronique par transmission et son procédé d'utilisation

(43) Veröffentlichungstag der Anmeldung: 26.11.2014
(73) Patentinhaber: Studer, Daniel, Dr., 3293 Dotzigen (BE) (CH)
(72) Erfinder: Studer, Daniel, Dr., 3293 Dotzigen (BE) (CH)
(74) Vertreter: Dolder, Fritz

(56) Entgegenhaltungen:
- US-A1- 2009 183 613
- LADINSKY ET AL: "Chapter Eight: Micromanipulator-Assisted Vitreous Cryosectioning and Sample Preparation by High-Pressure Freezing", METHODS IN ENZYMOLOGY; [METHODS IN ENZYMOLOGY], ACADEMIC PRESS, US, Bd. 481, 1. Januar 2010 (2010-01-01), Seiten 165-194, XP008165832, ISSN: 0076-6879
- MARK S. LADINSKY ET AL: "Vitreous cryo-sectioning of cells facilitated by a micromanipulator", JOURNAL OF MICROSCOPY, Bd. 224, Nr. 2, 1. November 2006 (2006-11-01), Seiten 129-134, XP055087820, ISSN: 0022-2720, DOI: 10.1111/j.1365-2818.2006.01674.x

## Beschreibung

Das Herstellen von ultradünnen Kryoschnitten (trockenes Schneiden) von meist, aber nicht ausschliesslich biologischen Proben erweist sich bei der Untersuchung von Objekten im Transmissions- Elektronenmikroskop (TEM) als eine kritische Phase, welche über den Erfolg der Methode entscheidet. Im TEM können nur sehr dünne Festkörper untersucht werden. Eine vernünftige biologische Probendicke ist kleiner als 200 nm. Um eine biologische Probe in einen Festkörper umzuwandeln wird im klassischen Verfahren die Probe fixiert, meist durch Aldehyde, das Wasser durch Lösungs-mittel ersetzt und die Probe durch Substituieren der Lösungsmittel in ein Polymer eingebettet und auf Wasser ultradünn geschnitten. Mit dieser Methode verliert die Probe alles Wasser, d.h. 60-80% der Masse einer biologischen Probe gehen verloren und es werden zwangsläufig Artefakte induziert. Die Alternative besteht darin, die Proben zu vitrifizieren, d.h. die Proben schnell Einzufrieren, so dass das Wasser der biologischen Strukturen während des Abkühlens keine Eiskristalle bildet und daraus Kryoschnitte herzustellen, die auf einem TEM-Kryohalter bei etwa 100 K untersucht werden *(*A. Al-Amoudi et al, EMBO J. 2004, 23(18):3583-8.).

Nach diesem Verfahren werden ultradünne Kryoschnitte folgendermassen hergestellt: Die Probe muss vitrifiziert, also höchst viskös oder quasi-fest bei 100 K und frei von Eiskristallen sein, weil Proben, welche Eiskristalle enthalten, spröde und kaum schneidbar sind. Zur Vorbereitung wird die Probe in oder auf einem Probenhalter angefroren oder durch andere Mittel zuverlässig befestigt. Die derart vorbereitete Probe wird in einem vorgekühlten Kryo-Ultamikrotom (bei meist 110 K) für das Kryoschneiden befestigt. Der Mikrotomarm wird in den Kryostaten geführt dort nimmt er die vitrifizierte Probe auf und regelt Vorschub und Schneidebewegung.

Anschliessend wird die Probe mit einem speziellen Trimm-Diamantmesser getrimmt. Das Resultat des Trimmens ist üblicherweise eine geköpfte Pyramide, welche aus dem interessierenden biologischen Material besteht. Das oberste Quadrat der geköpften Pyramide hat eine Seitenlänge von ca. 150 µm und steht ungefähr 30 µm vor.

Nach dem Trimmen wird die Probe üblicherweise mit einem Diamantmesser bei 110 °K ultradünn mit einem nominalen Vorschub von beispielsweise 50 nm (Schichtdicke: 50-70 nm) geschnitten bei einer Schneidegeschwindigkeit von beispielsweise 1 mm s-1 . Dieses Kryoschneiden bewirkt eine Stauchung der Schnitte bis zu 50 % in der Schnittrichtung, d.h das Volumen des Schnittes bleibt konstant, die in der Schnittrichtung liegende Kantenlänge des geschnittenen Quadrats ist um die Hälfte reduziert und die Schnittdicke doppelt so dick. Durch Ionisation der Schneideumgebung (Abstand zur Messerkante cal 5-20mm) mit einem kommerziell erhältlichen Ionisator (Beispiele: CRION zu Leica EM FC 7 von Leica-Microsystems oder Static-Line Ionizer von Diatome U.S.) kann die Stauchung reduziert aber nicht gänzlich verhindert werden.

Die vitrifizierten Proben bilden an der Diamantmesserkante Schnittbänder, d.h. der erste Schnitt klebt am zweiten Schnitt und wird von diesem an der Messeroberfläche nach unten geschoben. *Zur Übertragung der Schnittbänder auf Probenhalter for die Transmissions- Elektronenmikroskopie (TEM) wird eine Vorrichtung eingesetzt, welche in einer an sich bekannten Mikrotomanlage eingebaut ist und dazu dient, die in der Mikrotomanlage erzeugten Schnittbänder auf einen an sich bekannten Probenhalter zu übertragen. Diese Vorrichtung weist zwei voneinander unabhängige Werkzeuge für die Manipulation der Probenhalter auf. Diese Werkzeuge sind selbständig während des Schneidvorganges ---- positionierbar (D1 -* US 2009/183613 A1 - Lihl et al. *vom 23. Juli 2009).* Wenn es gelingt, das kurze Schnittband der ersten Schnitte durch Antippen an eine Fiber, beispielsweise menschliche Wimper oder an Tierhaare (beispielsweise Dalmatiner Fellhaare oder Meerschweinchen Fellhaare) zu adsorbieren (was meist nicht dauerhaft gelingt), kann ein längeres Schnittband mit einer Mehrzahl von Einzelschnitten hergestellt werden, wenn das Schnittband an dieser Wimper von der Schnittkante weggeführt wird. Alternativ kann man mit der Fiber an einer sich manchmal von selbst bildende Schlaufe des kurzen Schnittbandes einhaken. Auch dies ergibt keine dauerhafte Verbindung zwischen Fiber und Schnittband. Beide Ansätze sind sehr anspruchsvolle, schwierige Schritte bei der Herstellung von Kryoschnitten, da die Wimper manuell geführt wird, was eine feinmotorische Höchstleistung darstellt und regelmässig nur von wenigen Operatoren erfolgreich ausgeführt werden kann.

Alternativ dazu kann die Wimper am Ende eines zweckmässig dimensionierten Formstückes (z.B. Stab) aus wärmeisolierendem Material befestigt werden, welches seinerseits in den Arm eines kommerziellen Mikromanipulators (Beispiel: Micromanipulator-M von Leica Microsysteme GmbH) eingespannt wird. Dies ermöglicht es, die Wimper mit Hilfe des Manipulators präzise und kontrolliert im Mikrobereich zu bewegen ***(***M.S. Ladinsky et al. , Methpods in Enzymology, Academic Press US. Bd. 481 (2010), 176***,*** Figuren 8.3 und 8.7, D3 ***-*** M.S. Ladinsky et al. , Journal of Microscopy 224 (2006), 130-131*,* ***Fig.** 2**, **S. 132).*** Schwierig bleibt das Befestigen der ersten Schnitte an die Wimper. Eine dauerhafte Verbindung zwischen Wimper und Schnittband ist nicht möglich.

Das derart präparierte Schnittband wird anschliessend auf einem für die TEM geeigneten Probenhalter befestigt, meistens einem Netzchen mit Maschen von 50 bis 100 µm. Dieser Schritt wird meist manuell ausgeführt: Der Operator führt dabei das Netzchen, beispielsweise ein mit einem Kohlenstofffilm beschichtetes 200-mesh Molybdän basiertes Netzchen (beispielsweise: EM Sciences, Hatfield, USA) unter das noch immer mit der Diamantmesserkante verbundene Schnittband und berührt dieses durch vertikale Bewegung des Netzchens von unten nach oben.

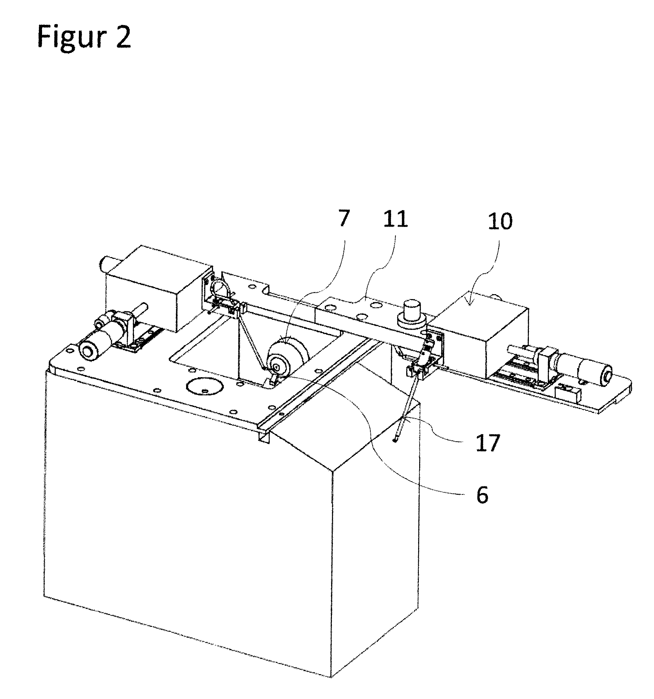

Alternativ dazu kann das durch einen Mikromanipulator mit Wimper geführte Schnittband nach Erreichen der gewünschten Länge durch Absenken in vertikaler Richtung mit dem Mikromanipulator zur Berührung mit dem Netzchen gebracht werden. Durch eine zweite Wimper wird das Schnittband anschliessend auf dem Netzchen verschoben bzw. nach Wunsch angedrückt und schliesslich möglichst nahe am Diamantmesser vom Rest des Schnittbandes getrennt **(**M:S. Ladinsky et al., Methods in Enzymology, Academic Press US, Bd. 481 (2010), 186/187***,*** Ladinsky et al. Journal of Microscopy 224 (2006), S. 130 und 132, Fig. 2B).

Die Haftung des Schnittbandes auf dem Netzchen wurde nach *Ladinsky et al.* mit Hilfe von mechanischem Pressen erzielt. ***(***M.S. Ladinsky et al., Methods in Enzymology, Academic Press US, Bd. 481 (2010), 187***)*.** Diese Methode ist nicht sehr effizient, oft gehen dabei Schnitte verloren. Pierson et al. (2010, J Struct Biol. 169(2): 220-221, besonders Fig.1 S. 221.) befestigten deshalb die Schnitte auf dem Netzchen mit Hilfe eines Ionisators (Beispiele: DE-Offenlegungsschrift 10 2008 059 284 vom 30.7.2009 und CRION zu Leica EM FC 7, beide von Leica-Microsysteme GmbH, oder Static-Line Ionizer von Diatome U.S.). Bei normaler Ionisierung (Discharge Mode) bewirkt die nahe der Messerschneide installierte Elektrode eine Verminderung der elektrostatischen Effekte (die beispielsweise verantwortlich sind für die oft starke Adsorption der an der Messerkante gebildeten Schnitte an die Oberfläche des Messers) und verbessert dadurch das Gleiten der Schnitte während bzw. nach dem Schneidevorgang (Produkteinformation Leica EM FC7, Leica Mikrosysteme GmbH 2013, Seite 7).

*Pierson at al.* stellten fest, dass Schnittbänder durch Ionisation fest auf ein mit Kohle beschichtetes, elektrisch leitendes Netzchen (engl. grid) aufgebracht werden können. Dazu wurde die normale Ionisierung (Discharge Mode) abgestellt und ein geerdetes Netzchen wurde von unten mit dem Schnittband in Berührung gebracht. Im Zeitpunkt des Berührens von Schnittband und Netzchen wurde mit dem gleichen Ionisator im Charge Mode ein erhöhter kurzer (<1sec) Ionisationsstoss ausgelöst dadurch haften die Schnittbänder irreversibel auf dem Netzchen. In der Praxis kann deshalb der Operator durch einfaches Aufschalten des Ionisators (Charge Mode), vorzugsweise mittels Fusspedal, die Ionisierung auf der Oberfläche des Schnittbandes starten und dadurch das Schnittband auf dem Netzchen befestigen (Pierson et al. 2010, J Struct Biol. 169(2): 220-221, besonders Fig.1 S. 221.; Produkteinformation Leica EM FC7, Seiten 11/12).

Die Aufgabe der vorliegenden Erfindung bestand darin, die Handhabung von in UI-tramikrotomen hergestellten ultradünnen Schnittbändern zu vereinfachen und zu verbessern.

Auch bei Verwendung eines Mikromanipulators ist das Aufbringen der ersten Schnitte eines Schnittbandes auf die von Ladinsky et al. eingeführte Fiber (Wimper) meist nur mit zusätzlicher manueller Unterstützung möglich. Gegenüber dieser anspruchsvollen manuellen Präparation an der Fiber bestand deshalb die Aufgabe der Erfindung darin, die manuellen Anforderungen an die ausführenden Operatoren zu senken und dadurch zu bewirken, daß auch durchschnittlich geschultes und begabtes technisches Personal in der Lage ist, einwandfreie Proben von Schnittbändern in grösseren Mengen herzustellen.

Gegenüber der Mikromanipulation mit einer nicht elektrisch leitenden Fiber aus einem Di-elektrikum wie tierisches oder menschliches Haar (Wimper) oder einem nicht leitenden Kunststoff (Nylon usw.) bestand die Aufgabe der Erfindung darin, die Geschwindigkeit und die Reproduzierbarkeit der Präparation der Schnittbänder zu erhöhen und alle dazu erforderlichen Instrumente in einer leicht zu bedienenden Vorrichtung zu integrieren.

Die Aufgabe wird durch eine Vorrichtung nach dem Kennzeichen des Patentanspruchs 1 sowie durch ein Verfahren zu deren Verwendung nach dem Kennzeichen des Patentanspruchs 16 gelöst.

Durch die erfindungsgemässe Vorrichtung wird die Reproduzierbarkeit der Ergebnisse der Präparation erheblich gesteigert und die Ausschussquote praktisch vollständig eliminiert. Die Arbeitsabläufe bei der Präparation werden mit der erfindungsgemässen Vorrichtung derart vereinfacht, daß die Präparation von durchschnittlich geschultem und manuell durchschnittlich begabtem technischem Personal zuverlässig durchgeführt werden kann.

Das Verfahren zur Handhabung von Schnittbändern wird mit dem erfindungsgemässen Schnittbandmanipulator und dem ebenfalls einfach zu manipulierenden Netzchenhalter stark vereinfacht. Dieser Manipulator führt präzise eine Spitze, welche leicht auswechselbar am Ende des Manipulators angebracht ist. Diese Spitze (Fiber, Faser) besteht beispielweise aus einem tierischen oder menschlichen Haar (Wimper, Borste) oder einer Faser aus einem geeigneten dielektrischen Material (beispielsweise Kunststoff oder Glas). Die Oberfläche dieser Faser wird durch Beschichten (beispielsweise durch Bedampfen im Hochvakuum oder Behandeln mit einer Sputterquelle) mit einer geeigneten elektrisch leitenden Oberflächenschicht (vorzugsweise aus Gold, einem anderen Metall oder Kohlenstoff) elektrisch leitend gemacht und kann dadurch geerdet werden. Die Faser sollte möglichst weich sein, damit allfälliges Berühren der delikaten Messerschneide während den Manipulationen nicht zu deren Beschädigung führt. Der Einsatz eines feinen Metalldrahtes, der in der Kälte an Härte und Steifigkeit zunimmt, ist deshalb nur bedingt empfehlenswert.

Die elektrisch leitende Spitze der Faser wird hinter das sich auf dem Messer des Mikrotoms bildende Schnittband positioniert. Anschliessend wird mit Hilfe eines kommerziell erhältlichen Ionisators (siehe oben CRION zu Leica EM FC 7 von Leica-Microsystems oder Static-Line Ionizer von Diatome U.S.) das Schnittband durch Erhöhen der Ionisation an der geerdeten Spitze befestigt. Die Entfernung zwischen der Spitze des Ionisators und der Spitze (Fiber) des Schnittbandmanipulators beträgt dabei vorzugsweise etwa 1.5 cm.

Gegenüber einer mit Mikromanipulator geführten nicht elektrisch leitenden Faser hat die erfindungsgemässe Vorrichtung mit der elektrisch leitenden Oberfläche der Faser den Vorteil, dass das Anheften des Endes des Schnittbandes an der geerdeten Spitze durch den Ionisator problemlos und wesentlich schneller und präziser ausgeführt werden kann und dass dabei eine dauerhafte Befestigung des Schnittbandes an der Spitze der Faser entsteht. Die dauerhafte Verbindung zwischen leitender Faser und Schnittband kann nur durch das Zerstören, d.h. das Abreissen der mit der Faser verbundenen Schnitte, erfolgen. Mit einer Faser aus einem dielektrischen Material ist keine vergleichbar dauerhafte Verbindung möglich.

Diese feste Verbindung zwischen leitender Faser und Schnittband ist von grossem Vorteil. Zum Beispiel ist die Ionisationsstärke im Discharge Mode, welche das Schnittband in Schwingung versetzen kann, nicht gleich kritisch wie wenn das Schnittband bei nicht leitender Faser lose angebracht ist. Auch ist es möglich, mit einer dauerhaften Verbindung zwischen leitender Faser und Schnittband plötzlich auftretende Schnittverformungen, die beispielsweise auf eine nicht ganz homogene Probe zurückgeführt werden können, entgegen zu wirken, indem zum Beispiel der Zug der Faser auf das Schnittband variiert, oder in seiner Richtung geringfügig geändert, werden kann. Ist die Faser mit dem kurzen Schnittband fest verbunden, so ist ein nicht erfolgreiches führen des sich, durch die vom Mikrotom hergestellten Schnitte, bildenden Schnittbandes fast ausgeschlossen, da der Mikromanipulator mit dem die Faserspitze geführt wird, problemlos die erforderlichen Bewegungen ausführt. Ist die Faser nicht elektrisch leitend und kann daher nicht fest mit dem Schnittband verbunden werden, so kann das Schnittband sich immer wieder von dieser nicht leitenden Spitz lösen, was die Manipulation entsprechend schwieriger und zeitraubender gestaltet.

Ist das gebildete kurze Schnittband aufgrund der elektrostatischen Anziehung fest mit der Faserspitze verbunden, so wird es an der geerdeten Spitze des Schnittbandmanipulators mit Hilfe eines konventionellen Mikromanipulators derart geführt, dass ein möglichst langes zusammenhängendes Schnittband entsteht. Das Schnittband weist in der Regel eine Länge von etwas mehr als 3 mm auf und erstreckt sich damit über den ganzen Durchmesser eines in der TEM gebräuchlichen Netzchens.

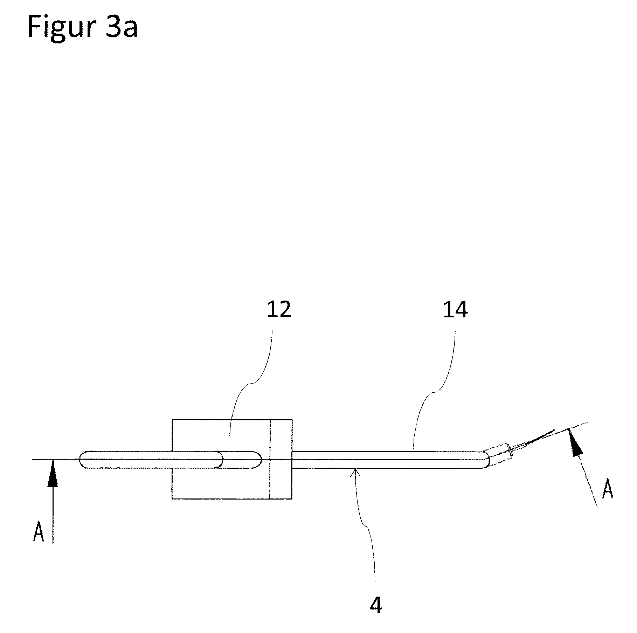

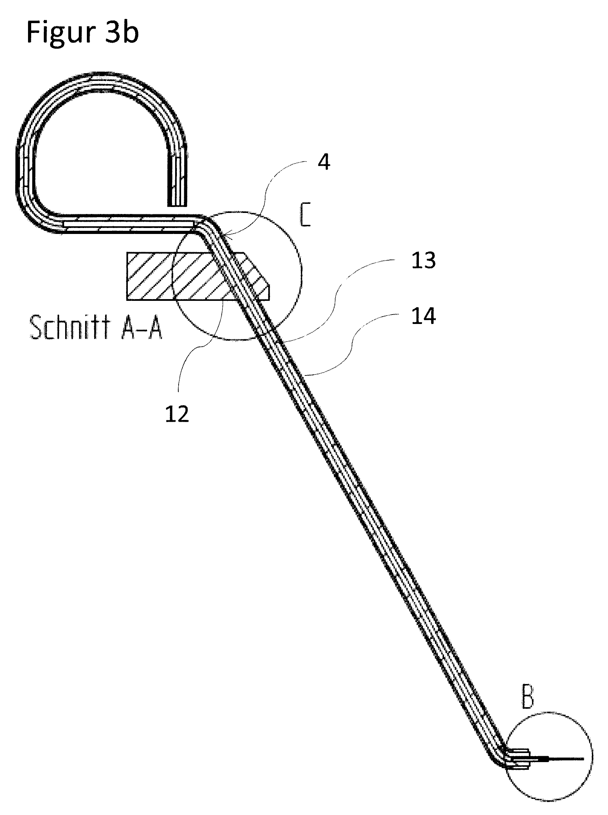

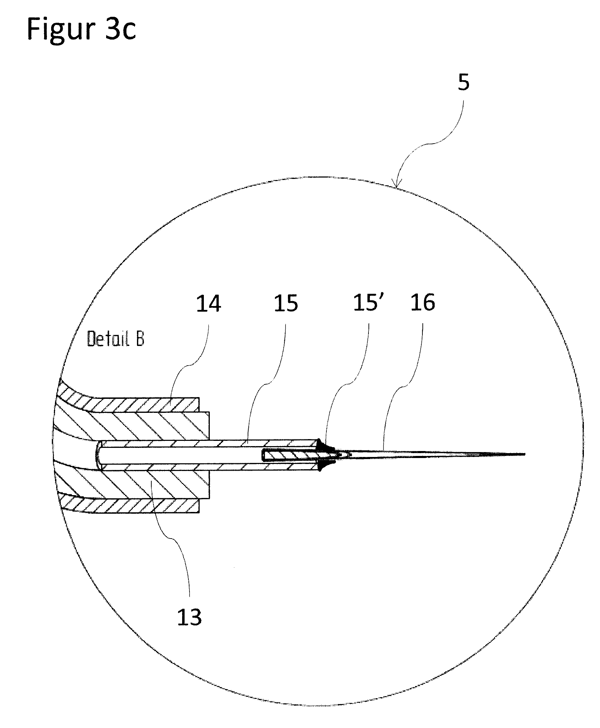

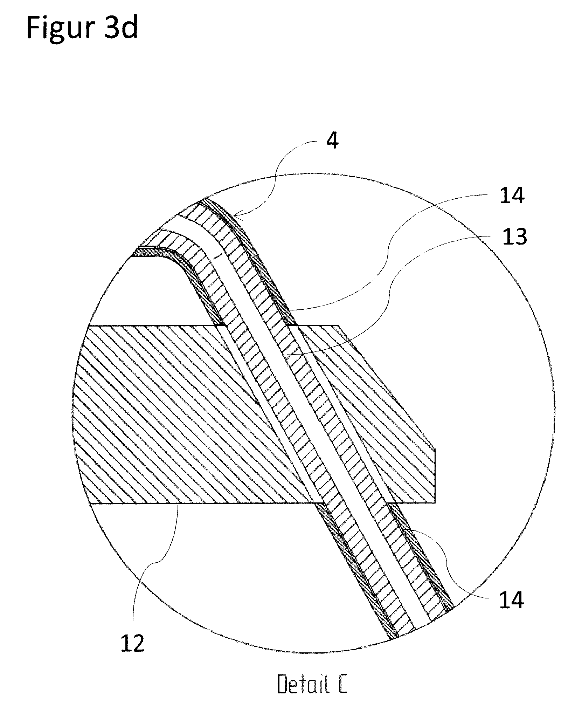

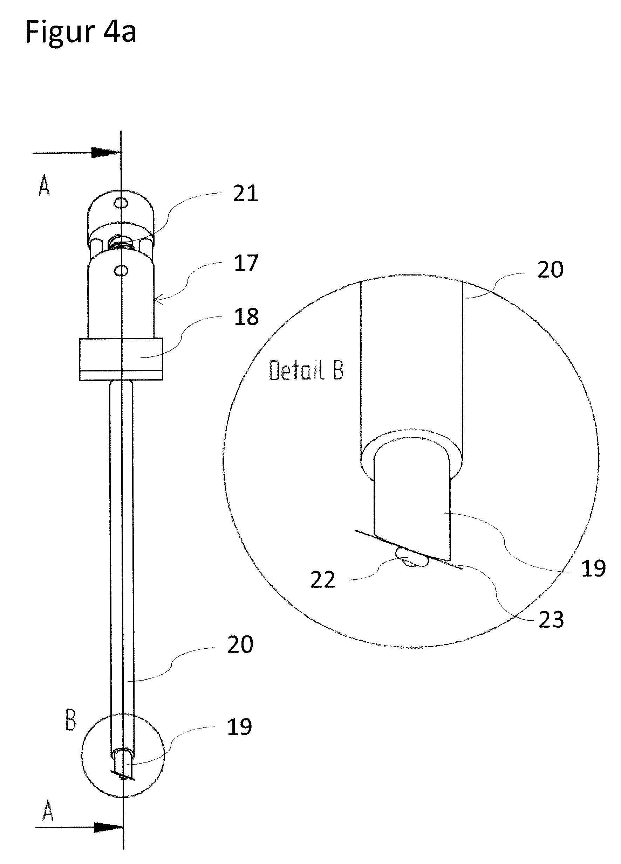

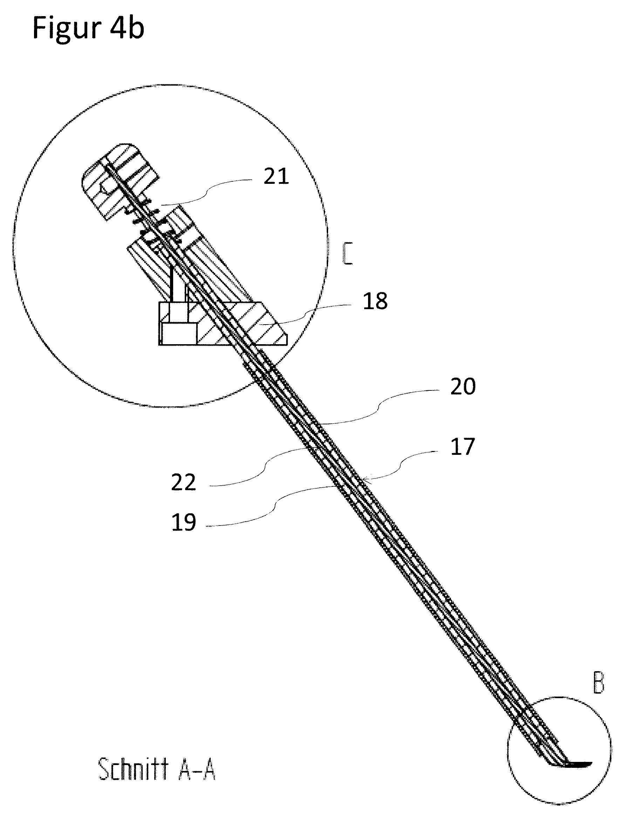

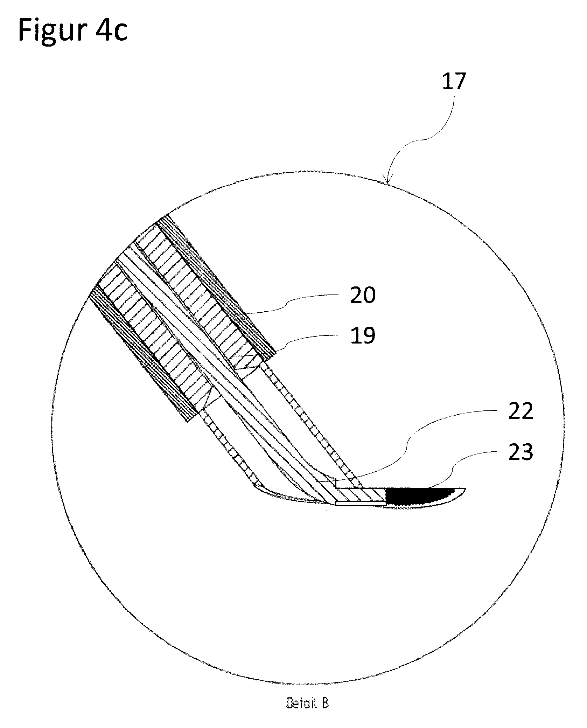

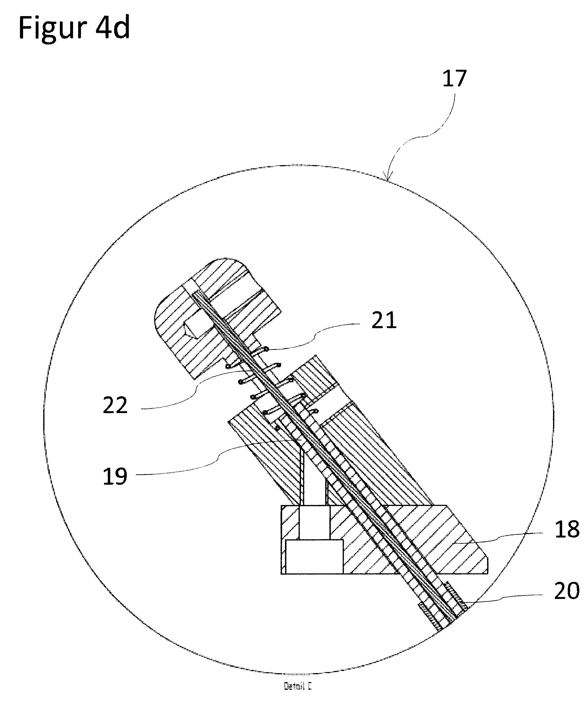

Am gegenüber liegenden Rand der Vorrichtung ist ein zweiter Mikromanipulator angebracht, welcher an einer vertikalen Achse weggedreht werden kann und einen Netzchenhalter führt (dazu auch DE- Offenlegungsschrift 10 2008 059 284 vom 30.7.2009, Figuren 3 und 4). Das in diesem Netzchenhalter fixierte Netzchen (grid) für die TEM wird seinerseits in die gewünschte Position vertikal unter das Schnittband verschoben, vertikal von unten her mit diesem Schnittband in Berührung gebracht und das Schnittband anschliessend durch Erhöhen der Ionisation mit dem Netzchen verbunden. Der Netzchenhalter ermöglicht es, das mit Schnitten belegte Netzchen sehr rasch in käufliche Aufbewahrungscontainer (Gatan) zu transferien, welche beispielsweise in flüssigem Stickstoff bereitgestellt werden.

Das sowohl manuell als auch bei Einsatz eines Mikromanipulators schwierige Anheften und Führen des Schnittbandes mit der nicht leitenden, dielektrischen Faser (Wimper) und das manuell oder mit Mikromanipulator ausgeführte Übertragen des Schnittbandes mit Hilfe der Faser auf das Netzchen werden durch die erfindungsgemässe Vorrichtung erheblich vereinfacht. Der Vorteil besteht vor allem in dem vereinfachten und verbesserten Fixieren der Kryoschnittbänder an einer elektrisch leitenden Spitze, d.h. im Herstellen einer dauerhaften Verbindung zwischen Spitze und Schnittband. Für die Auswahl und Ausbildung der Operatoren ergibt sich daraus der Vorteil, dass es keine hochentwickelte Feinmotorik braucht, um erfolgreich Kryoschnitte herzustellen, da alle anspruchsvollen Schritte durch Mikromanipulatoren ausgeführt werden, welche einfach zu bedienen sind. Auch das Befestigen und Auswechseln des Netzchens aus dem für die TEM geeigneten Material ist einfach und effizient. Da auch das Netzchen (grid) einfach und schnell ausgewechselt und manipuliert werden kann, ergibt sich ein weiterer Vorteil der erfindungsgemässen Vorrichtung.

Ist das Schnittband auf dem TEM-Netzchen aufgebracht, wird es so rasch wie möglich in flüssigen Stickstoff transferiert, um eine Kontamination mit Eiskristallen zu minimieren. Dabei entsteht eine wesentlich geringere Kontamination mit Eiskristallen als bei den herkömmlichen manuellen Verfahren. Dies ist für den Erfolg des Verfahrens entscheidend, da schon kleine Eiskristalle (Durchmesser < 0.5 Mikrometer) im TEM nicht mehr durchstrahlbar sind. Der Netzchenhalter überträgt auf einfachste Art das mit dem Schnittband bestückte Netzchen (grid) in einen käuflichen Aubewahrungsbehälter.

Im Ergebnis erhöht das erfindungsgemässe Verfahren die Erfolgschancen und die Betriebssicherheit bei der Herstellung von Schnittbändern, insbesondere von Kryoschnittbändern, massiv und erhöht dadurch auch die Erfolgschancen der Untersuchung der derart erzeugten Schnittbänder mit den Mitteln der TEM.

Der erfindungsgemässe Schnittband-Manipulator ermöglicht es darüber hinaus, auch trocken geschnittene, in Polymer eingebettete Proben nach dem Schneiden vereinfacht zu handhaben; das Verfahren wird in diesem Fall ohne Kühlung bei Raumtemperatur durchgeführt.

Im folgenden werden bevorzugte Ausführungsformen der erfindungsgemässen Vorrichtung sowie deren Verwendung anhand von Zeichnungen beispielhaft dargestellt, wobei die Erfindung nicht auf diese dargestellten besonderen Ausführungsformen beschränkt ist. Dabei stellen dar:
Fig. la Gesamtansicht der Vorrichtung, aufgebaut auf einem schematisch skizzierten kommerziellen Kryostaten, ohne Ionisationsvorrichtung,
Fig. 1b Gesamtansicht der Vorrichtung mit eingesetzter Ionisationsvorrichtung,
Fig. 2 Gesamtansicht der Vorrichtung, aufgebaut auf einem schematisch skizzierten kommerziellen Kryostaten, ohne Ionisationsvorrichtung, wobei der zweite Mikromanipulator mit dem Netzchenhalter durch Rotieren um eine vertikale Drehachse ausserhalb des Arbeitsfeldes angeordnet ist,
Fig. 3a Aufsicht auf den Schnittbandmanipulator mit der Faserspitze,
Fig. 3b Längsschnitt durch den Schnittbandmanipulator gemäss A-A,
Fig. 3c vergrössertes Detail B der Spitze des Schnittbandmanipulators,
Fig. 3d vergrössertes Detail C des Verbindungsstückes mit eingesetzem Schnittbandmanipulator,
Fig. 4a Aufsicht auf den Netzchenhalter mit vergrössertem Detail B,
Fig. 4b Längsschnitt durch den Netzchenhalter gemäss A-A,
Fig. 4c vergrössertes Detail B der Spitze des Netzchenhalters mit eingesetztem Netzchen,
Fig. 4d vergrössertes Detail C des Verbindungsstückes mit eingesetztem Netzchenhalter.

In den Figuren 5a bis 9b werden die verschiedenen Phasen I bis VI des erfindungsgemässen Verfahrens zur Manipulation von Schnittbändern unter Verwendung der erfindungsgemäßen Vorrichtung beispielhaft dargestellt. Es stellen dabei dar:

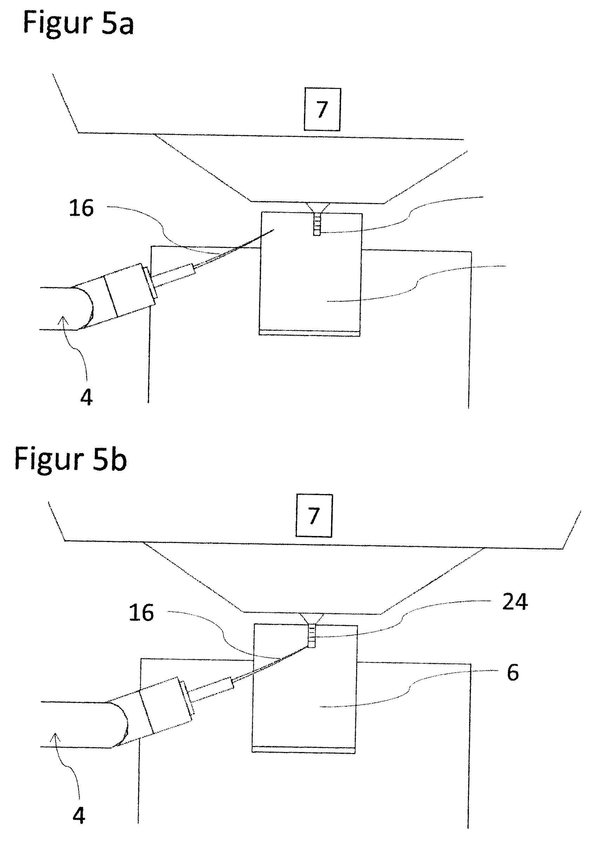

Fig. 5a Phase I der Schnittmanipulation im Kryostaten: Ausgangsposition in Aufsicht
Fig. 5b Phase II der Schnittmanipulation im Kryostaten: Befestigen des Schnittbandes an der Faserspitze; in Aufsicht;

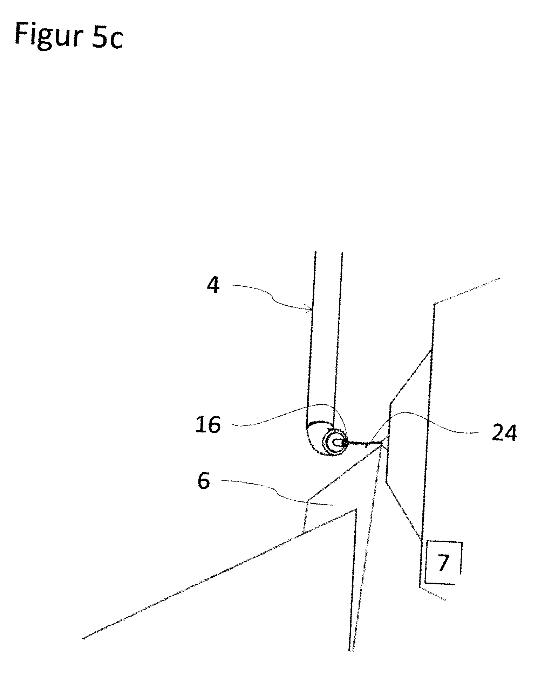

Fig. 5c Phase II in Seitenansicht,

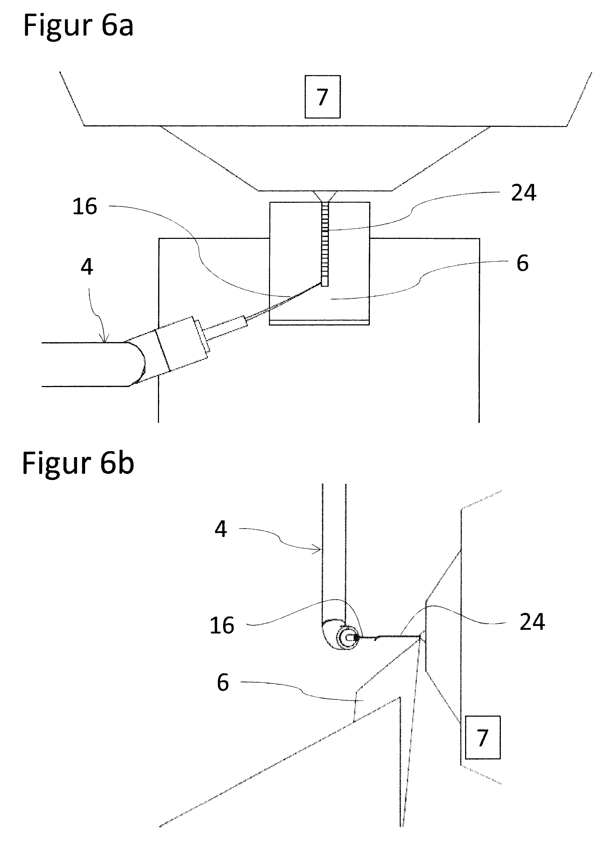

Fig. 6a Phase III der Schnittmanipulation im Kryostaten: Herausziehen des Schnittbandes, in Aufsicht;
Fig. 6b Phase III in Seitenansicht,

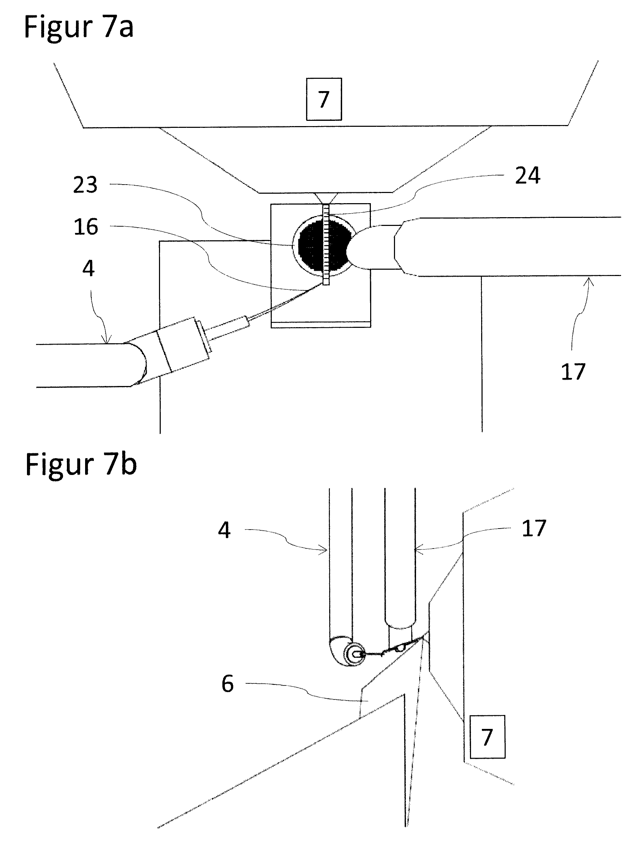

Fig. 7 a Phase IV der Schnittmanipulation im Kryostaten: Positionieren des Netzchens unterhalb des Schnittbandes,
Fig. 7b Phase IV in Seitenansicht,

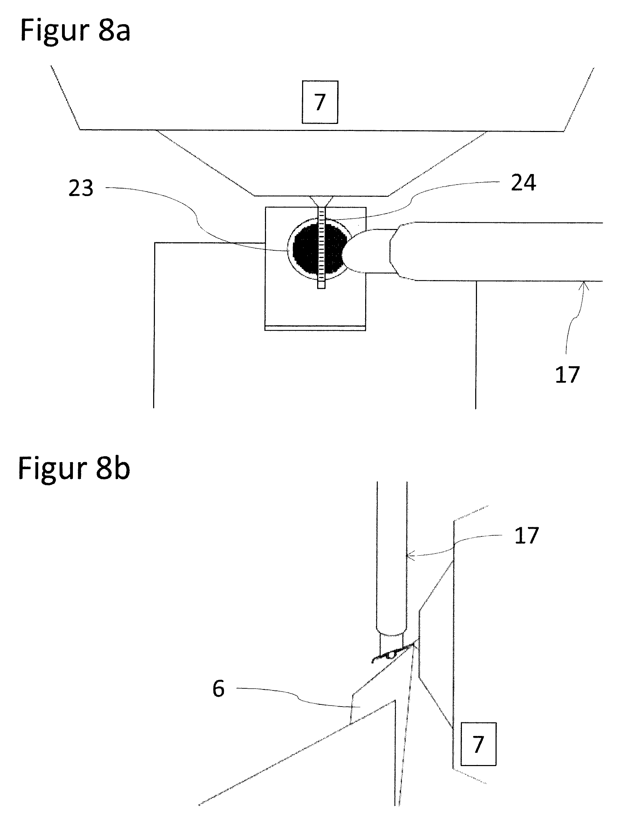

Fig. 8a Phase V Netzchen mit aufgebrachtem Schnittband nach Entfernen des Schnittbandmanipulator mit der Faserspitze, in Aufsicht;
Fig. 8b Phase V in Seitenansicht,

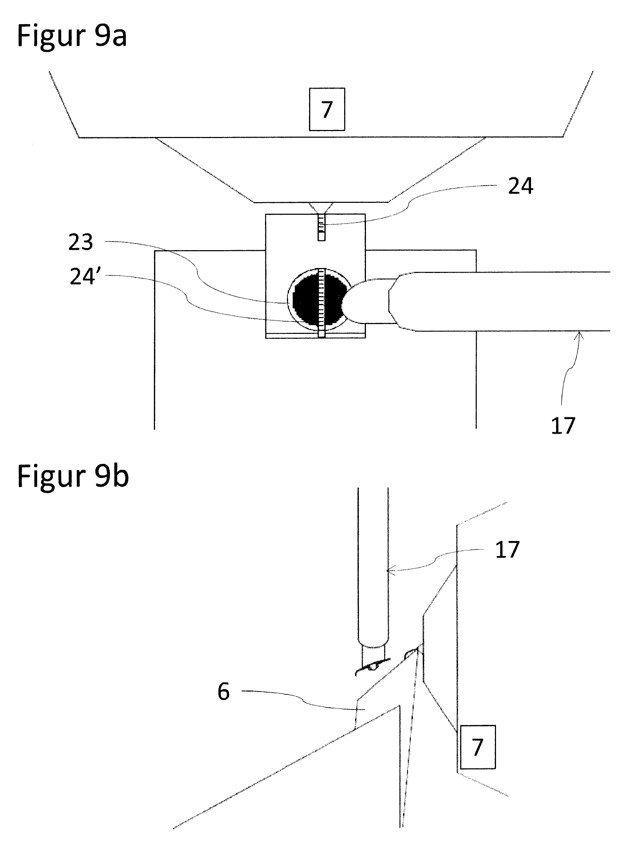

Fig. 9a Phase VI Netzchen mit aufgebrachtem Schnittband nach Entfernen vom Mikrotom;
Fig. 9b Phase VI in Seitenansicht,

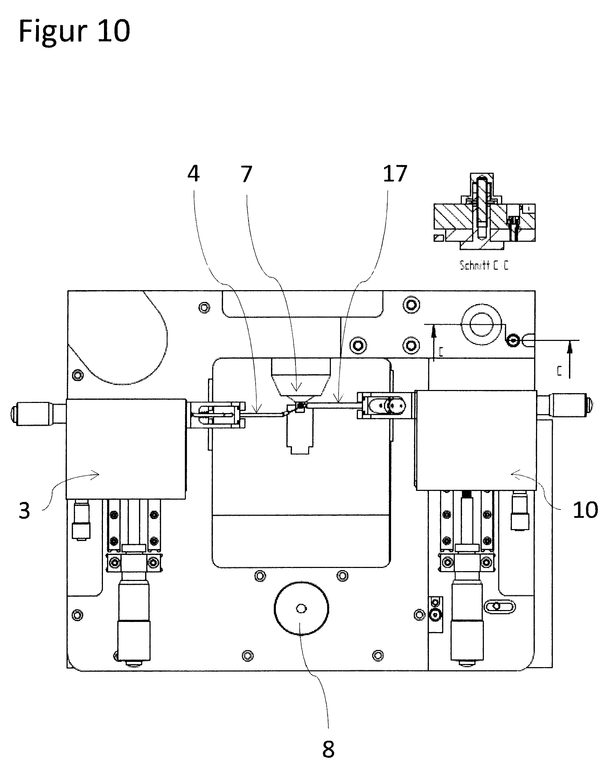

Fig. 10 Gesamtansicht der Vorrichtung in Aufsicht während der Phase V.

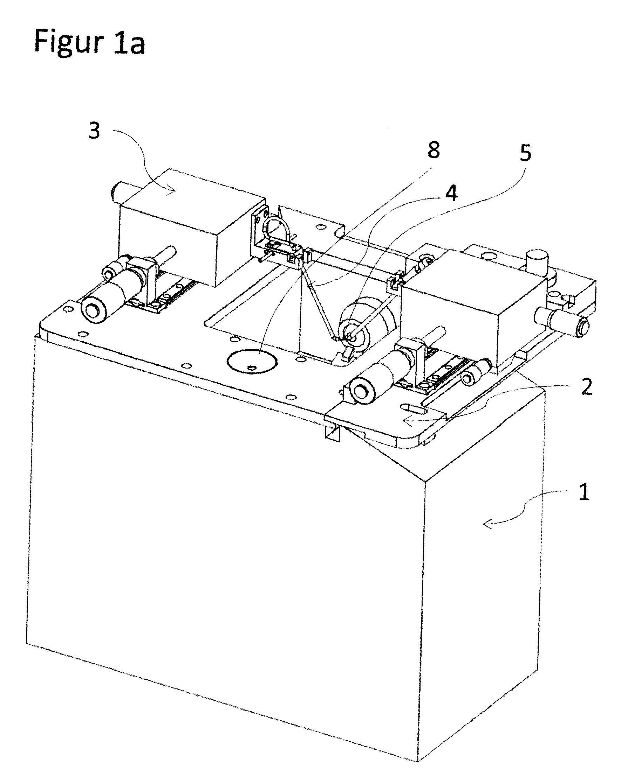

Auf dem Deckel (2) der Umrandung eines Kryostaten (Kryostat, 1) oder einer nicht gekühlten Ultramikrotomanlage ist ein erster Mikromanipulator (3) auswechselbar befestigt, welcher eine Stelleinrichtung nach den drei Achsen xyz des Raumes aufweist. **(****Fig. 1a****)**. Der Kryostat (1) umgibt dabei den Arbeitsraum für den Schneidevorgang in der Mikrotomanlage und lässt einen Zugriff zum Schneidevorgang durch eine Öffnung des Deckels (2) vorzugweise von oben zu. Dieser erste Mikromanipulator (3) führt den erfindungsgemässen Schnittbandmanipulator (4) in den drei räumlichen Achsen und bringt dessen Spitze (5) in die gewünschten Positionen. Die Schnittbänder werden an der Schnittkante eines Diamant- oder Glasmessers (6) eines Ultramikrotoms mit einem hier nur schematisch dargestellten Mikrotomarm (7) gebildet **(****Fig. 2****).** Ein auf der Schnittkante dieses Messers (6) durch Vorschub und Auf- und Abbewegung des Mikrotomarms (7) gebildetes Band von Kryoschnitten wird mit der Spitze (5) durch elektrostatische Anziehung verbunden und kann dadurch einfach manipuliert werden.

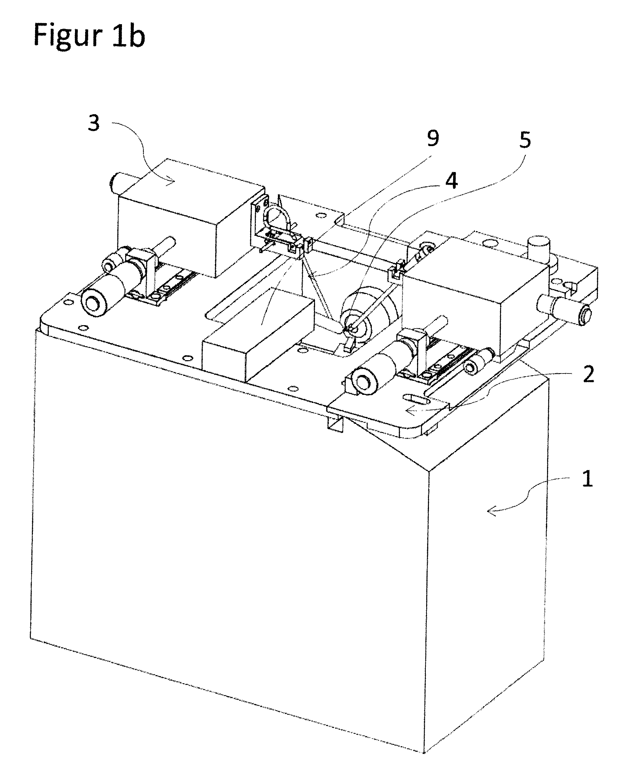

Die Öffnung (8) im Deckel (2) ist eine aus magnetisierbarem Material gefertigte Andockstelle für eine kommerziell erhältliche Ionisationsvorrichtung (9) **(****Fig. 1b****).** Diese kann durch Fusspedale betätigt werden, welche hier nicht bildlich dargestellt sind. Im sogenannten Discharge Mode wird die Adhäsion der frisch gebildeten Schnitte an der Messeroberfläche reduziert. Der Charge Mode wird für zweierlei Anwendungen eingesetzt. Erstens wird mit dessen Hilfe das anfänglich gebildete kurze Schnittband mit einer leitenden Faser verbunden ("angeheftet") und zweitens wird das als Resultat des Mikrotomierens gebildete lange Schnittband auf einem entsprechend positionierten Netzchen (sog. grid) irreversibel befestigt (beispielsweise Ionisationsvorrichtung Leica EM FC7 CRION: Charge Mode, Discharge Mode).

Ein zweiter Mikromanipulator (10) ist auf einem um eine vertikale Achse drehbaren Ausleger (11) des Deckels (2) befestigt **(****Fig. 2** und **Fig. 10****)** und weist ebenfalls eine Stelleinrichtung nach den drei Achsen xyz des Raumes auf. Dieser zweite Mikromanipulator führt das elektrisch leitende Netzchen (grid) für die TEM Mikroskopie mit Hilfe eines Netzchenhalters (17) und kann unabhängig vom ersten Mikromanipulator selbständig in den drei Richtungen des Raumes geführt werden. Dass der auf dem Ausleger (11) befestigte zweite Mikromanipulator (10) auf diese Weise durch Rotation um eine vertikale Achse aus dem Grundriss des Deckels (2) hinweg bewegt werden kann, bietet den grossen Vorteil, dass der Operator im "weggedrehten" Zustand des Auslegers (11) freien und ungehinderten Zugang zum Arbeitsraum innerhalb des Kryostaten hat und so den Vorgang des Anheftens der Schnittbänder an den Schnittbandmanipulator (4) ungehindert beobachten und falls erforderlich steuern kann.

Die gesamte Manipulation sowohl der Schnittbänder als auch der TEM-Netzchen erfolgt mit diesen zwei Mikromanipulatoren von einem Operator von *ausserhalb* des Arbeitsraums für den Schneidevorgang in der Mikrotomanlage.

Der in **Fig. 3a** **und** **3b** dargestellte Schnittbandmanipulator (4) wird mit einem aus Metall gefertigten Verbindungsstück (12) mit dem ersten Mikromanipulator (3) einfach und schnell verbunden und kann von diesem einfach und schnell wieder ausgewechselt werden. Durch eine Ausnehmung dieses Verbindungsstückes (12) wird ein dünnes Metallrohr (13) geführt, vorzugsweise aus rostfreiem Stahl, welches an seinem Ende abgewinkelt ist. Das Rohr (13) ist von einer elektrisch isolierenden Kunststoffschicht (14) auswechselbar umgeben, welche vorzugsweise aus einem Schrumpfschlauch besteht und durch Aufschrumpfen auf das Rohr (13) aufgebracht ist.

Im abgewinkelten Teil des Inneraums des Rohres (13) ist die ihrerseits zusammengesetzte Spitze (5) eingesetzt **(****Fig. 3c****).** Diese Spitze (5) besteht aus einem dünnen metallischen Röhrchen (15), in welches eine Faser (16) beispielsweise ein tierisches oder menschliches Haar (sog. Wimper), eine Glas- oder Kunststoffaser, allenfalls ein dünner Metalldraht eingesetzt und mit einem elektrisch leitenden Klebstoff (15'), beispielsweise mit "flüssiger Kohle", einem mit Metallpulver versetzten Klebstoff, auswechselbar befestigt wird. Die Faser (16) weist dabei vorzugsweise einen grössten Durchmesser von ca. 200 µm und vorzugsweise eine Länge von einigen Millimetern auf. Die zusammengesetzte Spitze (5) ist im Innenraum des Rohres (13) einfach auswechselbar, indem sie mittels einer Pinzette in diesen Innenraum hineingeschoben wird. Durch den Winkel am Ende des Rohres (13) und durch die Krafteinwirkung beim Einschieben wird das Röhrchen (15) formschlüssig verankert ("verkeilt") und dadurch auswechselbar, aber dennoch formstabil, befestigt.

Die Oberfläche der Faser (16) wird vor dem Einsetzen durch Beschichten (beispielsweise durch Beschichten mit einer Sputterquelle oder Aufdampfen unter Rotation im Vakuum) mit einer elektrisch leitenden Oberflächenschicht aus einem Metall oder Kohlenstoff elektrisch leitend gemacht. Das Material dieser Oberflächenschicht wird dabei vorzugsweise aus einem oder mehreren der folgenden Werkstoffe ausgewählt: Gold, Silber, Kupfer, Nickel, Palladium, Platin, Kobalt, allenfalls auch aus Kohlenstoff. Durch diese elektrisch leitende Oberflächenschicht kann die Spitze (5) im Verlauf des Verfahrens geerdet werden, soweit dies für das Handling der Schnittbänder erforderlich ist. Vor der Beschichtung wird die Faser (16) mit Hilfe von für die Entfettung von Haaren geeigneten Lösungsmitteln, vorzugsweise Aceton, gereinigt und anschliessend in der dargestellten Weise beispielsweise mit der bereits erwähnten Leitkohle oder einem anderen elektrisch leitenden Klebstoff im Röhrchen (15) befestigt.

Eine Mehrzahl von Röhrchen mit daran befestigten Fasern (16) werden im gleichen Arbeitsgang gemeinsam beschichtet. Die Schichtdicke der leitenden Oberflächenschicht beträgt dabei für Metalle vorzugsweise zwischen 30 bis 50 nm. Die Metallschichten werden auf die Oberfläche aufgesputtert. Dies wird mit Hilfe einer Glimmentladung bei einem Argongasdruck von vorzugsweise 0.1 mbar durch Beschiessen eines Targets des gewünschten Metalles bewirkt, welcher beispielsweise in Tellerform ausgestaltet ist. Die aus dem Target herausgeschlagenen Metallcluster verteilen sich im Rezipienten und bedecken diesen und auch das zu beschichtende Objekt nach Massgabe der aufgewendeten Sputterenergie und der Zeit des Beschichtungsvorganges.

Kohlenstoff wird vorzugsweise im Vakuum (p< 10-5 mbar) aufgedampft (sog. Elektronenstoss- oder Widerstandsverdampfung). Die experimentelle Erfahrung hat gezeigt, dass die optimale Schichtdicke von Kohle zwischen 10-20 nm beträgt. Dickere Schichten können leicht aufbrechen und sich von der Oberfläche der beschichteten Faser (16) lösen.

Die auf diese Weise mit Metallen oder Kohlenstoff beschichteten Fasern (16) können bei sorgfältiger Handhabung mehrmals verwendet werden. Ist die Spitze der Faser mit Schnittresten belegt, kann sie zusammen mit dem Schnittbandmanipulator für kurze Zeit aus dem Kryostaten entfernt und bei Zimmertemperatur aufgetaut werden. Leitende Fasern werden beschädigt bei zu starker Deformation. Dies kann eintreten wenn unvorsichterweise die Schnittkante des Messers mit der Faser "überfahren" wird oder der Schnittbandmanipulator unzweckmässig im Kryostaten positioniert oder nach Beendigung der Arbeit unvorsichtig weggeräumt wird.

Verbindungsstück (12) und Metallrohr (13) sind elektrisch leitend miteinander verbunden: Wie in **Fig. 3d** dargestellt, ist zu diesem Zweck die Kunststoffschicht (14) um das Rohr (13) beim Verbindungsstück (12) unterbrochen. Dadurch wird der elektrische Kontakt zwischen Rohr (13) und Verbindungsstück (12) hergestellt und die Erdung des Rohres (13) ermöglicht, soweit dies im Verlauf des Verfahrens zweckmässig ist.

Wie in **Fig.4a** und **4b** dargestellt, ist im zweiten Mikromanipulator (10) ein Netzchenhalter (17) für TEM-Netzchen (23) auswechselbar eingebaut. Das metallische Verbindungsstück (18) wird durch ein Metallrohr (19), vorzugsweise aus rostfreiem Stahl, durchstossen, welches mit diesem Verbindungsstück (18) elektrisch leitend verbunden ist. Das Rohr (19) weist einen elektrisch isolierenden Kunststoffüberzug (20), vorzugsweise aus einem Schrumpfschlauch auf. Dieser endet unterhalb des Verbindungsstückes (18), wodurch der elektrische Kontakt zwischen Rohr (19) und Verbindungsstück (18) hergestellt und die Erdung des Rohres (19) ermöglicht wird, soweit dies im Verlauf des Verfahrens zweckmässig ist.

Am oberen Ende des Rohres (19) ist ein Federmechanismus (21) vorgesehen, der es erlaubt, einen dünnen Draht oder Stab (22) im Innenraum des Rohres (19) in axialer Richtung zu verschieben. Da dieser Draht (22), wie in **Fig. 4c** als vergrössertes Detail dargestellt, an seinem Ende eine Abwinkelung aufweist, ist es möglich, durch die Bewegung in axialer Richtung ein für den Gebrauch in der TEM an sich bekanntes Netzchen (23) auswechselbar zwischen Rohr (19) und Draht (22) festzuklemmen und wieder freizugeben. Durch Krafteinwirkung auf den in **Fig. 4d** vergrössert dargestellten Federmechanismus (21) wird der Draht (22) innerhalb des Rohres (19) in axialer Richtung nach vorne geschoben und dadurch zwischen dem Ende des Rohres (19) und dem abgewinkelten Ende des Drahtes (22) Platz für das Einführen des Netzchens (23) geschaffen. Durch Entlasten (Loslassen) des Federmechanismus wird das Ende des Drahtes (22) in axialer Richtung zurückgeführt und dadurch das Netzchen (23) an diesem Platz auswechselbar eingeklemmt. Durch erneutes Aktivieren (Drücken) des Federmechanismus (21) wird das festgeklemmte Netzchen (23) wieder freigegeben.

Wie im vergrösserten **Detail B in** **Figur 4a** dargestellt, sind die Enden des Rohres (19) und des Drahtes (22) so konstruiert, dass das festgeklemmte Netzchen (23) nicht horizontal, sondern leicht schräg zum Schnittband zu liegen kommt, welches an der Messerkante (6) gebildet wird. Das bedeutet, dass die der Messerkante des Messers (6) zugewandte Kante des Netzchens (23) höher liegt als die der Messerkante abgewandte Seite des Netzchens.

Ein Netzchen (grid, 23), wie es als Probenträger in der Transmissions- Elektronenmikroskopie gebraucht wird, ist auf diese Weise im Netzchenhalter (17) eingespannt. Derartige an sich bekannte Netzchen (23) weisen für die Verwendung in der TEM unterschiedliche Maschengrösse auf, der bevorzugte Durchmesser beträgt 3 mm, die bevorzugte Schichtdicke 30 µm. Dieses Netzchen (23) besteht mindestens teilweise aus einem elektrisch leitenden Material beispielweise aus Kupfer, Gold oder Molybdän, welche meist mit einer dünnen (ca. 10 nm dicken) elektrisch leitenden Schicht, vorzugsweise einer Kohleschicht belegt ist. Es werden vorzugsweise kommerziell erhältliche Netzchen, wie beispielsweise C-FlatTM (Electron Microscopy Sciences, Hatfield, PA, US) verwendet. Diese sind Kupfernetzchen, welche mit einer ca. 10 nm dicken Kohlenstoffschicht belegt sind und zweckmässig definierte Löcher (Lochdurchmesser beispielweise zwischen 1 und 2 µm) in regelmässiger Anordnung aufweisen.

Das Verfahren zur Verwendung der erfindungsgemässen Vorrichtung umfasst sechs einzelne Schritte, welche als Phasen I bis VI gekennzeichnet werden:
Phase I: In der Ausgangsposition befinden sich die ersten Schnitte am Mikrotommesser (6) und die leitende Faserspitze (16) des Schnittbandmanipulators (4) berührt das noch kurze Schnittband (24) noch nicht **(****Fig. 5a****).**
Phase II: Die elektrisch leitende und geerdete Spitze (16) wird zwischen Messer (6) und die ersten Schnitte des sich formenden Schnittbandes (24) gebracht. Sie wird mit dem aus dem Mikrotom austretenden Schnittband (24) mit Hilfe des ersten Mikromanipulators (3) von unten in Berührung gebracht und durch kurzzeitige Erhöhen der Ionisation (Charge Mode) und der daraus entstehenden elektrostatischen Anziehung mit dem Schnittband (24) fest verbunden **(****Figur 5b** **und** **5c****).** Dies bietet den Vorteil, dass die Spitze (16) mit dem Schnittband (24) zuverlässig verbunden ist, was bei einer nicht elektrisch leitenden Wimper ausgeschlossen ist.
Phase III: Nach dieser Befestigung wird die Faserspitze (16) mit dem daran haftenden Schnittband so weit dies möglich ist vom Messer (6) des Mikrotoms weggeführt. Durch die Herstellung neuer Schnitte der Probe durch das Mikrotomieren verlängert sich das Schnittband (24) und muss durch Nachziehen der Faserspitze (16) des Schnittbandmanipulators (4) mit Hilfe des Mikromanipulators (3) in die Horizontale gestreckt werden. Es wird dabei nach dem Austreten des Schnittbandes aus dem Mikrotom lediglich eine minimale Zugkraft auf das in der Regel mechanisch sehr fragile Schnittband ausgeübt, und durch das Wegziehen der Faserspitze (16) in horizontaler Richtung das Durchhängen des Schnittbandes nach Massgabe der Leistung des Mikrotoms verhindert. In **Fig. 6a und 6b** wird beispielhaft dargestellt, wie das auf dem Messer (6) im Kryostaten mit dem Mikrotomarm (7) gebildete Schnittband (24) mit Hilfe des Schnittbandmanipulators (4) geführt wird. Während des Schneidevorgangs ist der Ionisator im Discharge Mode mit entsprechender Leistung in Betrieb. Ist das Schnittband (24) erzeugt, so wird der Ionisator ausgeschaltet.
Phase IV: Positionieren des TEM-Netzchens bestehend aus einer mit einer dünnen (ca. 10 nm dikken) Kohleschicht belegten Metallfolie unterhalb des Schnittbandes: Wie in **Fig. 7a** dargestellt, wird das Netzchen (23) mit Hilfe des durch den zweiten Mikromanipulator (10) geführten Netzchenhalters (17) unter dem Schnittband (24) positioniert, wenn das Schnittband (24) durch Schneiden der Probe die gewünschte Länge erreicht hat. Das Aufbringen und Zurechtlegen des Netzchens (23) auf dem Netzchenhalter (17) mit Hilfe des Federmechanismus (21) ist einfach und effizient. Dadurch kann das Netzchen (23) schnell ausgewechselt und manipuliert werden.
Phase V: Befestigen des Schnittbandes auf dem Netzchen; Trennen von der Faserspitze: Wenn das Schnittband (24) die gewünschte Länge erreicht hat und das Netzchen (23) mit Hilfe des zweiten Mikromanipulators (10) in der gewünschten, schrägen Position unter dem Schnittband (24) positioniert ist, wird durch Verschieben des Netzchens (23) in vertikaler Richtung das Schnittband (24) mit dem Netzchen (23), an der dem Messer zugewandten Kante, in Berührung gebracht und gleichzeitig mit dem ersten Mikromanipulator (3) die Faserspitze (16) gesenkt, damit das Schnittband (24) nahe an die Oberfläche des Netzchens (23) zu liegen kommt **(****Fig. 7b****).** Durch einen wenige Millisekunden dauernden Ionisationsstoss (Charge Mode) werden die beiden anschliessend miteinander in Berührung gebracht und das Schnittband (24) dadurch irreversibel auf dem Netzchen (23) befestigt. Diese Phase V ist in Fig. 10 im Gesamtüberblick dargestellt.
Phase VI: Abschneiden bzw. Abreissen des Schnittbandes auf dem Netzchen, Abtrennen vom Ultramikrotom: Nach dem Befestigen des Schnittbandes (24) auf dem Netzchen (23) wird die Faserspitze (16) vom Schnittband (24) weggeführt und dadurch die Verbindung zwischen den beiden unterbrochen **(****Fig. 8a und 8b****).**

Schliesslich wird durch eine geeignete Bewegung des Schnittbandes (24) in dessen Längsachse der auf dem Netzchen (23) haftende Teil des Schnittbandes (24') vom Rest desselben abgetrennt. Nun wird der auf dem Netzchen (23) haftende Teil (24') des Schnittbandes mit Hilfe des vom zweiten Mikromanipulator (10) geführten Netzchenhalters (17) aus der Vorrichtung entfernt **(****Fig. 9a und 9b****).** Das derart abgetrennte Schnittband (24') wird durch einfaches Drücken auf den Federmechanismus (21) vom Netzchenhalter (17) getrennt und so rasch wie möglich in ein mit flüssigem Stickstoff gefülltes kommerziell erhältliches Transfergefäss verbracht. In dieser Form kann das Schnittband (24') der Untersuchung, insbesondere in der TEM, zugeführt werden. Durch die kurze Transferzeit wird die Kontamination mit Eiskristallen im Vergleich mit den bekannten Verfahren vermindert.

Der Vorteil dieses Verfahrens besteht darin, dass auf Seiten des Operators keine hochentwickelte Feinmotorik nötig ist, um erfolgreich Kryoschnitte herzustellen, da alle anspruchsvollen Schritte durch Mikromanipulatoren ausgeführt werden, welche einfach zu bedienen sind. Diese sind so konstruiert, dass die über dem Kryostaten beim käuflichen Mikrotomen zur Beobachtung angebrachte schwenkbare Lupe in ihrer Funktion nicht behindert wird (zu grosse Manipulatoren verhindern das ungehinderte Schwenken der Lupe). Weiter ist die in **Fig. 2** und **Fig. 10** dargestellte Drehbarkeit des Netzchen-Mikromanipulators um eine vertikale Drehachse auf dem Ausleger (11) von grossem Nutzen, da damit eine von Hand geführte Wimper an einem isolierten Stäbchen (vorzugsweise Holz) in den Kryostaten geführte werden kann, um z.B das Messer von unerwünschten Schnitten und allfälliger Eiskontamination zu befreien.

Ein wichtiger Vorteil der Erfindung ist das rasche Manipulieren des Netzchens (23) im Falle des Kryoschneidens nach erfolgter Fixierung der Schnitte auf dem Netzchen (23). Eiskristalle sind im Kryostaten immer vorhanden. Adsorbieren diese in der kalten Stickstoffgas Atmosphäre auf die Schnitte, so sind die Strukturen darunter nicht mehr für eine Untersuchung in der TEM geeignet, da die Eiskristalle im Elektronenmikroskop nicht durchstrahlbar sind. Unter flüssigem Stickstoff adsobieren jedoch keine Eiskristalle auf den Schnitten. Ein rascher Transfer der auf dem Netzchen (23) adsorbierten Schnittbänder (24), wie er von der erfindungsgemässen Vorrichtung ermöglicht wird, ist deshalb von grossem präparativem Nutzen.

Das Verfahren zur Übertragung der aus dem Mikrotom austretenden Schnittbänder auf einen TEM-Träger kann sowohl für Proben biologischer Herkunft (Gewebeproben) als auch für Proben aus anderen Materialien (beispielsweise hochpolymeren Kunststoffen) eingesetzt werden. Es ist gleichermassen geeignet für das Arbeiten bei Raumtemperatur als auch bei Temperaturen im Kryobereich zwischen 190 °K und 110 °K, vorzugsweise bei etwa 120 °K.

## Patentansprüche

1. Vorrichtung zur Übertragung von Schnittbändern auf Probenhalter für die TransmissionsElektronenmikroskopie, wobei die Vorrichtung auswechselbar in einer an sich bekannten Mikrotomanlage eingebaut ist und die in dieser Mikrotomanlage erzeugten Schnittbänder mit Unterstützung einer Ionisationsvorrichtung auf einen an sich bekannten Probenhalter übertragen werden, ***wobei*** zwei voneinander unabhängige Werkzeuge einerseits für die Manipulation der Schnittbänder und andererseits für die Manipulation der Probenhalter *eingesetzt werden,* welche jedes selbständig während des Schneidvorganges durch zwei voneinander unabhängige Mikromanipulatoren positionierbar sind, **wobei** die Manipulation der Schnittbänder mit Hilfe einer elastischen Faser aus dielektrischem Material erfolgt, welche an der Spitze des ersten Werkzeugs angebracht ist, **dadurch gekennzeichnet daß,**
das erste Werkzeug (4) zur Manipulation von Schnittbändern (24) eine auswechselbare Spitze (5) aufweist und eine elektrisch leitende Verbindung zwischen dem Werkzeug (4) und der Spitze (5) herstellbar ist,
und daß die genannte Spitze (5) ein dünnes Metallröhrchen (15) sowie eine mit einer elektrisch leitenden Oberflächenschicht versehene elastische Faser (16) aus dielektrischem Material aufweist, welche mit einem elektrisch leitenden Klebstoff (15') mit dem Ende dieses Metallröhrchens (15) auswechselbar verbunden ist.

2. Vorrichtung nach Patentanspruch 1, **dadurch gekennzeichnet, daß** das erste Werkzeug (4) zur Manipulation von Schnittbändern (24) ein Verbindungsstück (12), ein Metallrohr (13), ein Rohr aus einem elektrisch isolierenden Werkstoff (14) sowie eine auswechselbare Spitze (5) aufweist, wobei der elektrisch isolierende Werkstoff (14) im Bereich des Verbindungsstücks (12) unterbrochen ist, wodurch eine elektrisch leitende Verbindung zwischen Metallrohr (13) und Verbindungsstück (12) herstellbar ist.

3. Vorrichtung nach einem der Patentansprüche 1 bis 2, **dadurch gekennzeichnet, daß** das erste Werkzeug (4) an einem Ende abgewinkelt ist, vorzugsweise um 45 Grad zu seiner Längsachse.

4. Vorrichtung nach Patentanspruch *1 oder 2,* **dadurch gekennzeichnet, daß** die elastische Faser (16) ein Haar menschlicher oder tierischer Herkunft ist oder aus Glas oder Kunststoff besteht.

5. Vorrichtung nach einem der Patentansprüche 1 *oder 4,* **dadurch gekennzeichnet, daß** die elastische Faser (16), einen grössten Durchmesser von ca. 200 µm und eine Länge von einigen Millimetern aufweist.

6. Vorrichtung nach einem der Patentansprüche *1, 4 bis 5,* **dadurch gekennzeichnet, daß** die elektrisch leitende Oberflächenschicht aus einem oder mehreren Metallen, vorzugsweise aus einem oder mehreren der folgenden metallischen Werkstoffe besteht: Gold, Silber, Kupfer, Nickel, Palladium, Platin, Kobalt.

7. Vorrichtung nach einem der Patentansprüche *1, 4 bis* 6, **dadurch gekennzeichnet, daß** die elektrisch leitende metallische Oberflächenschicht vorzugsweise eine Schichtdicke von 30 bis 50 nm aufweist.

8. Vorrichtung nach einem der Patentansprüche *1, 4 bis* 7, **dadurch gekennzeichnet, daß** die elastische Faser (16) mit einer Oberflächenschicht aus Kohlenstoff versehen ist, welche vorzugsweise eine Schichtdicke von 10 bis 20 nm aufweist.

9. Vorrichtung nach Patentanspruch 1, **dadurch gekennzeichnet, dass** der zweite Mikromanipulator (10) auf einem Ausleger (11) des Deckels (2) des Kryostaten (1) um eine vertikale Achse drehbar angeordnet ist.

10. Vorrichtung nach einem der Patentansprüche 1 oder 9, **dadurch gekennzeichnet, daß** das zweite Werkzeug (17) zur Manipulation von für die *Transmissionselektronenmikroskopie* geeigneten Kunststoffnetzchen (23) ein Metallrohr (19), vorzugsweise aus rostfreiem Stahl, einen elektrisch isolierenden Kunststoffüberzug (20); vorzugsweise einen Schrumpfschlauch, sowie einen Federmechanismus (21) aufweist, womit ein dünner Draht (22) im Innenraum des Rohres (19) in axialer Richtung verschiebbar ist.

11. Vorrichtung nach Patentanspruch *10,* **dadurch gekennzeichnet, daß** der das Metallrohr (19) umfassende elektrisch isolierende (20) Werkstoff im Bereich des Verbindungsstücks (18) unterbrochen ist, wodurch eine elektrisch leitende Verbindung zwischen Metallrohr (19) und Verbindungsstück (18) herstellbar ist..

12. Vorrichtung nach einem der Patentansprüche *10 bis 11*, **dadurch gekennzeichnet, daß** der Draht (22) an einem Ende abgewinkelt ist, vorzugsweise um 45 Grad zu seiner Längsachse.

13. Vorrichtung nach einem der Patentansprüche *10 bis 12,* **dadurch gekennzeichnet, daß** durch Betätigen des Federmechanismus (21) das abgewinkelte Ende des Drahtes (22) am Ende des Rohres (19) verschiebbar ist und dadurch das für die *Transmissionselektronenmikroskopie* geeignete Netzchen (23) am Ende des Rohres (19) festklemmbar und wieder lösbar ist.

14. Vorrichtung nach einem der Patentansprüche *10 bis 13,* **dadurch gekennzeichnet, daß** das Ende des Rohres (19) und des Drahtes (22) so geformt sind, dass das Netzchen (23) nicht genau horizontal, sondern schräg zum zu transportierenden Schnittband (24) positioniert ist und die der Messerkante des Messers (6) zugewandte Kante des Netzchens (23) höher liegt als die der Messerkante abgewandte Seite des Netzchens (23).

15. Verfahren zur Übertragung von Schnittbändern, welche in einem an sich bekannten Ultra-Mikrotom hergestellt werden und an der Kante eines Ultra-Mikrotommessers austreten, auf Probenhalter für die Transmissionselektronenmikroskopie,
*wobei* durch die fortgesetzte Schneidetätigkeit des Mikrotoms das Schnittband (24) verlängert wird und geringfügig nach unten durchhängt,
die mit dem Ende des Schnittbandes (24) verbundene Spitze eines durch einen ersten Mikromanipulator (3) geführten Werkzeugs (4) zur Kompensation des Durchhängens des Schnittbandes (24) in horizontaler Richtung vom Messer entfernt wird, wodurch das Schnittband (24) wieder eine gestreckte Form annimmt,
*wobei* ein Netzchen (23) aus einem für die *Transmissionselektronenmikroskopie* geeigneten Material mit Hilfe *eines* durch einen zweiten Mikromanipulator (10) geführten Werkzeugs (17) in horizontaler Richtung unter das gestreckte Schnittband (24) verschoben wird, so dass es die gesamte Länge des Schnittbandes (24) abdeckt, das erwähnte Netzchen (23) mit Hilfe des Werkzeugs (17) durch Bewegen in vertikaler Richtung zur Berührung mit dem Schnittband (24) gebracht wird, durch kurzzeitiges Aufbringen von elektrostatischer Ladung durch eine Ionisationsvorrichtung auf das Netzchen (23) das Schnittband (24) auf dem Netzchen haftet, das auf dem Netzchen (23) haftende Schnittband (24') vom Rest des Schnittbandes (24) getrennt wird, und das mit dem abgetrennten Schnittband (24') verbundene Netzchen (23) aus der Vorrichtung entnommen wird,
**dadurch gekennzeichnet, daß**
a) die elektrisch leitende, elastische Faserspitze (16) eines durch den *genannten* ersten Mikromanipulator (3) geführten ***Schnittbandmanipulator (4)*** an das Ende des austretenden Schnittbandes (24) angenähert wird, *und*
b) durch eine Ionisationsvorrichtung kurzzeitig elektrostatische Ladung auf die Oberfläche des Schnittbandes (24) aufgebracht wird,
c) wodurch das negativ geladene Schnittband (24) *mit* der geerdeten, positiv geladenen Spitze (5) fest verbunden wird und haftet.

## Claims

1. A device for transfer of ribbons of sections to sample holders for transmission electron microscopy, wherein the device is installed exchangeably in a known microtome plant wherein the sections generated in this microtome system are transferred with the support of an ionisation device to a known sample holder, wherein two mutually independent tools are used firstly to manipulate the ribbon of sections and secondly to manipulate the sample holders, each of which can be positioned independently during the cutting process by two mutually independent micromanipulators, wherein the ribbon of sections is manipulated by means of an elastic fibre of a dielectric material, which is positioned on the tip of the first tool,
**characterised in that** the first tool (4) for handling the ribbon of sections (24) comprises an exchange-able tip (5), and an electrically conducting connection between the tool (4) and the tip (5) is achieved, and the tip (5) comprises a thin metal tube (15) and an elastic fibre (16) of dielectric material fitted with an electrically conductive surface coating, which is exchangeably connected to the end of the metal tube (15) by an electrically conductive adhesive (15').

2. Device according to claim 1, wherein said first tool (4) for manipulation of the ribbon of sections (24) comprises a connection piece (12), a metal tube (13), a tube made from an electrically insulating material (14) and an exchangeable tip (5), wherein the electrically insulating material (14) is interrupted in the region of the connecting piece (12), whereby an electrically conductive connection can be created between the metal tube (13) and the connecting piece (12).

3. Device according to any one of claims 1 or 2, wherein said first tool (4) is angled at one end, preferably by 45° to its longitudinal axis.

4. Device according to any one of claims 1 or 2, wherein said elastic fibre (16) is a hair of human or animal origin or is made of glass or a synthetic material.

5. Device according to any one of claims 1 or 4, wherein said elastic fibre (16) has a maximum diameter of around 200 µm and a length of a few millimetres.

6. Device according to any one of claims 1, 4 to 5, wherein said electrically conductive surface layer consists of one ore more metals, preferably one or more of the following metallic materials:
gold, silver, copper, nickel, palladium, platinum, or cobalt.

7. Device according to any one of claims 1, 4 to 6, wherein said electrically conductive surface layer preferably has a layer thickness of 30 to 50 nm.

8. Device according to any one of claims 1, 4 to 7, wherein said elastic fibre (16) is equipped with a surface coating of carbon which preferably has a layer thickness of 10 to 20 nm.

9. Device according to claim 1, wherein said second micromanipulator (10) is positioned on an extension arm (11) of the cover (12) of the cryostat (1) and can be rotated around its vertical axis.

10. Device according to any one of claims 1, or 9, wherein the second tool (17) for manipulating plastic grids (23) suitable for transmission electron microscopy comprises a metal tube (19) preferably of stainless steel, an electrically insulating plastic coating (20), preferably a shrink hose, and a spring mechanism (21), with which a thin wire (22) in the interior space of the tube (19) can be pushed in the axial direction.

11. Device according to claim 10, wherein said electrically insulating material (20) coating the metal tube (19) is interrupted in the region of the connecting piece (18), and hence an electrically conductive connection can be created between metal tube (19) and connecting piece (18).

12. Device according to any one of claims 10 or 11, wherein said wire (22) is angled at one end, preferably by 45° to its longitudinal axis.

13. Device according to any one of claims 10 to 12, wherein the angled end of said wire (22) at the end of the tube (19) can be moved by activating a spring mechanism (21), and hence the grid (23) for transmission electron microscopy at the end of tube (19) can be gripped and released again.

14. Device according to any one of claims 10 to 13, wherein the end of said tube (19) and the wire (22) are formed so that the grid (23) is positioned not precisely horizontally, but obliquely to the ribbon of sections (24) to be transported, and the edge of the grid (23) facing the cutter edge of the blade (6) lies higher than the side of the grid (23) facing away from the cutter edge of the blade (6).

15. Method for transferring ribbons of sections produced in a known ultramicrotome and delivered from the edge of a ultramicrotome cutter to sample holders for transmission electron microscopy,
wherein due to the continued cutting activity of the microtome the ribbon of sections (24) extends and sags slightly down, and the tip of the tool (4) guided by a first micromanipulator (3) and connected with the end of the ribbon (24) of sections is moved away from the cutter in the horizontal direction to compensate for the sag of the ribbon (24) of sections, and hence the ribbon (24) of sections again assumes an extended form,
wherein a grid (23) of a material suitable for transmission electron microscopy is moved in the horizontal direction by means of the tool (17) guided by a second micromanipulator (10) below the extended ribbon (24) of sections so that it covers the entire length of the ribbon (24) of sections,
wherein said grid (23) is moved in vertical direction by means of said tool (17) and brought into contact with the ribbon (24) of sections, and through a short-time application of electrostatic charge by an ionisation device the ribbon (24) of sections adheres to said grid (23),
wherein the ribbon (24') of sections adhering to the grid (23) is separated from the remainder of the ribbon (24) of sections, and the grid (23) carrying the separated ribbon (24') of sections is removed from the device,
**characterised in that**
a) the electrically conductive elastic fibre tip (16) of the tool (4) guided by said first micromanipulator (3) is moved to contact the end of the produced ribbon (24) of sections, and
b) a temporary electrostatic charge is applied to the surface of the ribbon (24) of sections by said ionisation device,
c) and hence the negatively charged ribbon (24) of sections is firmly connected and adheres to the earthed, positively charged tip (5).

## Revendications

1. Dispositif de transmission des rubans de coupes sur des porte-échantillons pour la microscopie électronique par transmission incorporé de manière interchangeable dans un système connu de microtome et permettant de transférer les rubans de coupes sur des porte-échantillons à l'aide d'un dispositif de ionisation, comprenant deux instruments indépendants pour manier d'une part les rubans de coupes et d'autre part des porte-échantillons qui sont positionnés pendant le procédé de coupure par deux micromanipulateurs indépendants arrangés de sorte que les rubans de coupes sont manipulées à l'aide d'une fibre élastique d'un matériel diélectrique fixée à la pointe du premier instrument, **caractérisé en ce que**
le premier instrument (4) pour la manipulation des rubans de coupes (24) comprend une pointe (5) interchangeable destinée à introduire un contact électrique entre l'instrument (4) et la pointe (5) et ladite pointe (5) comprend un tube métallique (15) épais ainsi qu'une fibre (16) élastique d'un matériel diélectrique munie d'une couche de surface conduisant le courant électrique fixée de manière interchangeable au bout du tube métallique (15) à l'aide d'un adhésif conduisant le courant électrique.

2. Dispositif selon la revendication 1, dans lequel le premier instrument (4) pour la manipulation des rubans de coupes (24) comprend une pièce intermédiaire (12), un tube métallique (13), un tube d'un matériel isolant (14) et une pointe interchangeable (5), et que le matériel isolant (14) est interrompu dans la région de la pièce intermédiaire (12) permettant un contact électrique entre le tube métallique (13) et la pièce intermédiaire (12).

3. Dispositif selon les revendications 1 ou 2, dans lequel le bout du premier instrument (4) est arrangé en forme angulaire, préférablement de 45° envers son axe longitudinale.

4. Dispositif selon les revendications 1 ou 2, dans lequel la fibre élastique (16) est un poil d'origine humaine ou animale ou se compose de verre ou de matière synthétique.

5. Dispositif selon les revendications 1 ou 4, dans lequel la fibre élastique (16) a un diamètre maximum d'environ 200 µm et une longueur de plusieurs millimètres.

6. Dispositif selon les revendications 1, 4 à 5, dans lequel une couche surface de la fibre élastique (16) conduisant le courant électrique se compose d'un ou plusieurs métaux, préférablement d'un ou plusieurs métaux comme or, argent, cuivre, nickel, palladium, platine ou cobalt.

7. Dispositif selon les revendications 1, 4 à 6, dans lequel la couche surface de la fibre élastique (16) conduisant le courant électrique a une épaisseur préférablement de 30 à 50 nm.

8. Dispositif selon les revendications 1, 4 à 7, dans lequel la fibre élastique (16) dispose d'une couche surface de charbon préférablement d'une épaisseur de 10 à 20 nm.

9. Dispositif selon la revendication 1, dans lequel le deuxième micromanipulateur (10) est positionné sur une pièce d'extension (11) du couvercle (2) du cryostat (1) permettant une rotation autour l'axe verticale.

10. Dispositif selon les revendications 1 ou 9, dans lequel le deuxième instrument (17) permettant la manipulation des porte-échantillons (23) d'un matériel synthétique destinés à la microscopie électronique par transmission comprend en outre un tube métallique (19), préférablement d'acier inoxydable, une couche surface (20) de matière synthétique isolant le courant électrique, préférablement en forme d'un tuyau rétrécissant, ainsi qu'un mécanisme de ressort permettant de bouger en direction axiale un fil épais (22) à l'intérieur du tube (19).

11. Dispositif selon la revendication 10, dans lequel la couche (20) isolant du courant électrique couvrant le tube métallique (19) est interrompue dans la région de la pièce intermédiaire (18) pour effectuer le contact électrique entre tube métallique (19) et pièce intermédiaire (18).

12. Dispositif selon les revendications 10 ou 11, dans lequel le bout du fil (22) forme un angle préférablement de 45° envers son axe longitudinale.

13. Dispositif selon les revendications 10 à 12, dans lequel le bout angulaire du fil (22) positionné au bout du tube (19) est manié à l'aide du mécanisme de ressort (21) et le porte-échantillons (23) de matériel synthétique pour la microscopie électronique par transmission est attaché au bout du tube (19) de sorte qu'il peut être saisi et relâché.

14. Dispositif selon les revendications 10 à 13, dans lequel le bout du tube (19) et du fil métallique (22) sont positionnés de sorte que le porte-échantillons (23) est positionné non pas en direction horizontale, mais incliné vers la bande de sections (24) et que le bord du porte-échantillons (23) orientée vers la carne du couteau (6) est placé plus haut que le bord du porte-échantillons (23) détourné de la carne du couteau.

15. Procédé de transmission de bandes de sections produits dans un ultramicrotome et éloignés du tranchant du couteau de l'ultramicrotome sur des porte-échantillons pour la microscopie électronique par transmission dans lequel
le ruban de coupes (24) est allongée par le procédé de coupure du microtome et est relâchée légèrement en suspens,
la pointe d'un instrument (4) guidé par un premier micromanipulateur (3) est attachée au bout du ruban de coupes (24) et est éloignée en direction horizontale du couteau pour compenser le ruban (24) relâchée permettant ainsi de étendre à nouveau le ruban (24),
un porte-échantillons (23) d'un matériel destiné à la microscopie électronique par transmission est positionné à l'aide d'un instrument (17) guidé par un second micromanipulateur (10) en direction horizontale sous le ruban (24) étendu de sorte qu'il couvre la longueur entière de la bande (24),
le porte-échantillons (23) est déplacé en direction verticale et mis en contact avec le ruban de coupes (24), le ruban (24) est placé sur le porte-échantillons (23) à l'aide d'un transfert d'une charge électrostatique de courte durée produit par un dispositif de ionisation, le ruban (24') fixée sur le porte-échantillons(23) est séparée du reste du ruban (24), et le porte-échantillons (23) avec la partie du ruban séparée (24') est éloigné du système de microtome,
**caractérisé en ce que**
a) la pointe de la fibre (16) élastique conduisant le courant électrique d'un manipulateur (4) de rubans de coupes guidé par ledit premier micromanipulateur (3) est rapprochée au bout du ruban (24), et
b) à l'aide d'un dispositif de ionisation une charge électrostatique de courte durée est appliquée à la surface du ruban (24)
c) de sorte que ledit ruban (24) portant une charge électrique négative est attaché de manière permanente à ta pointe (5) portant une charge électrique positive.
